# FASCICULE DE BREVET EUROPEEN

(11) **EP 1 397 046 B1**
(45) Date de publication et mention de la délivrance du brevet: **26.09.2007**
(21) Numéro de dépôt: 02764925.0
(22) Date de dépôt: 24.06.2002
(51) Int. Cl.: A21D 13/00

(54) **PREPARATION ALIMENTAIRE RICHE EN PROTEINES ET HYPOCALORIQUE POUR PRODUITS DE TYPE PIZZA, ET SON PROCEDE DE PREPARATION**
PROTEINREICHE UND KALORIENARME LEBENSMITTELZUSAMMENSETZUNG FÜR PIZZAPRODUKTE UND VERFAHREN ZUR HERSTELLUNG
PROTEIN-RICH, LOW-CALORIE FOOD PREPARATION FOR PIZZA-TYPE PRODUCTS AND THE PREPARATION METHOD THEREOF

(30) Priorité: 22.06.2001 FR 0108268
(43) Date de publication de la demande: 17.03.2004
(73) Titulaire: CEPRODI-Compagnie Européenne de Produits Diététiques, 75008 Paris (FR)
(72) Inventeur: ALLOUCHE, Réginald, F-75006 Paris (FR)
(74) Mandataire: Boulinguiez, Didier
(86) Numéro de dépôt international: PCT/FR2002/002180
(87) Numéro de publication internationale: WO 2003/000059

(56) Documents cités:
- EP-A- 0 104 742
- EP-A- 0 107 315
- WO-A-01/93686
- WO-A-95/16355
- DE-A- 2 336 562
- DE-A- 2 831 729
- FR-A- 2 788 409
- GB-A- 2 219 723
- US-A- 6 126 977
- PATENT ABSTRACTS OF JAPAN vol. 1999, no. 13, 30 novembre 1999 (1999-11-30) -& JP 11 235148 A (FUJI OIL CO LTD), 31 août 1999 (1999-08-31)
- DATABASE FSTA [en ligne] INTERNATIONAL FOOD INFORMATION SERVICE (IFIS), FRANFURT/MAIN, DE; BACIGALUPO A ET AL: "Pisa-pan, a low-price protein-rich food of high nutritional value." Database accession no. 81-2-11-m1135 XP002191710 & ANALES CIENTIFICOS 1977 DEP. DE NUTR., UNIV. NACIONAL AGRARIA, LA MOLINA, LIMA, PERU, vol. 15, no. 1/4, pages 159-165,
- MORANDINI W ET AL: "BROT MIT HOHEM EIWEISS- UND NIEDRIGEM KOHLENHYDRATGEHALT" GETREIDE MEHL UND BROT, BOCHUM, DE, vol. 28, no. 5, 1974, pages 121-124, XP000982491 ISSN: 0367-4177

## Description

La présente invention a pour objet une préparation alimentaire sous forme de pâte garnie, de forme ronde, ovale, rectangulaire ou carrée, qui peut se présenter à température ambiante (conditionnement sous atmosphère contrôlée par exemple) ou de préférence dans un état surgelé. Cette préparation alimentaire est destinée à être cuite ou simplement réchauffée au moment de la consommation, afin de conduire à l'obtention de produits contretypant ou évoquant les produits traditionnels de type pizza, et elle est caractérisée par une teneur élevée en protéines et une teneur faible en glucides et en lipides. Elle est donc à la fois riche en protéines et hypocalorique.

Les produits traditionnels de type pizza sont par excellence des produits difficilement intégrables dans un régime car ils contiennent une teneur élevée en lipides et en glucides, ce qui restreint nettement leur consommation.

S'il est évident que les consommateurs sont de plus en plus attentifs à leur apparence physique et qu'ils ne veulent donc pas prendre de poids, il est également vrai qu'ils souhaitent cependant continuer à manger en se faisant plaisir, c'est-à-dire en mangeant à satiété des produits gustatifs. Ils sont de ce fait de plus en plus conduits à se tourner vers de multiples régimes dits "minceurs", qui se caractérisent le plus généralement par un moindre apport calorique quotidien, obtenu par une moindre quantité d'aliments ingérés, associée le plus souvent à une réduction de la teneur en lipides.

Malheureusement, ces régimes sont difficiles à observer sur une longue période et entraînent une perte de poids liée à une perte de masse musculaire. On observe alors un manque de tonicité et d'élasticité de la peau, et une asthénie physique et intellectuelle. En outre, les personnes suivant à la lettre ces régimes ne mangent pas autant qu'elles le souhaiteraient et souffrent donc de la faim et éprouvent des frustrations.

Il existe de ce fait un besoin de disposer de produits de régime qui, tout en étant hypocaloriques, n'entraînent pas les conséquences néfastes indiquées ci-dessus et qui permettent au consommateur de suivre un régime avec plaisir, c'est-à-dire qui lui permettent de manger à satiété et de perdre sa masse graisseuse, sans que ce soit au détriment de sa masse maigre.

Il est reconnu qu'il serait nécessaire de procurer à l'organisme, lors de ces périodes de réductions caloriques, un apport plus important en protéines de haute valeur nutritionnelle et biologique.

Mais cette contrainte supplémentaire complique encore l'exercice de formulation de compositions alimentaires qui soient à la fois hypocaloriques, industrialisables, organoleptiquement satisfaisantes, stables au point de vue du vieillissement et qui soient aisées à préparer, sans adjonction de matière grasse.

Ceci est encore plus ardu dans le cas de produits de type pizza car le fond de pâte doit satisfaire à de nombreuses exigences tant au niveau des contraintes de fabrication qu'au niveau des caractéristiques organoleptiques, visuelles et texturales (perméabilité, absorbabilité, souplesse, coloration notamment) du produit.

On sait en effet que la fabrication d'un tel produit de type pizza comprend un certain nombre d'étapes telles que :
- pétrissage,
- formage sur bouleuse,
- laminages successifs,
- manipulation automatique ou manuelle,
- dépôt de la garniture,
- cuisson,
qui doivent correspondre chacune à des conditions bien précises.

Ainsi, le pétrissage doit conduire à une pâte non collante et élastique. Quant au formage sur bouleuse, il doit se faire sans collage sur l'appareillage.

Le fond de pâte doit surtout pouvoir être travaillé correctement au niveau de l'opération de laminage. Il doit en effet être suffisamment résistant et élastique pour pouvoir subir un laminage dans un sens donné, éventuellement un retournement, puis un second laminage dans le sens transversal. On ne doit observer ni déchirure, ni rétractation, et les bords de la galette formée doivent être le plus réguliers possible et rester sensiblement plats au repos. D'autant plus que la galette en question est généralement encore manipulée, manuellement on automatiquement, après l'opération de laminage avant le dépôt de la garniture.

Le dépôt de cette garniture entraîne également des exigences très strictes au niveau de la texture du fond de pâte : la garniture ne doit en effet pas pouvoir passer au travers du fond de pâte, ni être trop fortement absorbée. Elle doit donc rester en surface sans trop imbiber la galette.

Enfin, au niveau de la cuisson, la pâte doit rester d'une couleur crème ou beige clair tout en présentant des marques de cuisson prononcées. Ceci est extrêmement difficile à obtenir lorsque la proportion de protéines est trop importante, car les protéines ont tendance à conduire à une couleur rouge brique.

Par ailleurs, il faut également faire en sorte que la pâte ne gonfle trop et ne bombe pas.

En ce qui concerne la garniture elle-même, elle doit également répondre à un certain nombre de desiderata. Elle doit ainsi contenir une teneur élevée en protéines, sans pour autant que la couleur et la texture soient trop modifiées par rapport à celles d'une pizza traditionnelle, et tout en étant organoleptiquememt satisfaisante.

D'autre part, la texture après cuisson doit rappeler celle d'une purée de tomates sans qu'il y ait un trop grand lissage ou un collage en raison de la teneur élevée en protéines.

Toutes ces contraintes sont évidemment très spécifiques aux produits du type pizza et n'ont rien en commun avec celles demandées pour un produit traditionnel de panification.

Le document DE2336562 décrit une préparation alimentaire riche en protéines et hypocalorique, se présentant sous forme de pâte.

Le document JP11235148 décrit une préparation alimentaire riche en protéines et hypocalorique, se présentant sous forme de pâte.

Le document 'Getreide, Mehl und Brot' 1974, vol. 28, nr. 5, p.121-124 (XP982491) décrit une préparation alimentaire riche en protéines et hypocalorique, se présentant sous forme de pâte.

La demande PCT WO01933686 divulgue une préparation alimentaire hyperprotéinée et hypocalorique sous forme de pâte garnie.

Or, il est du mérite du Demandeur d'avoir réussi à mettre au point, après de nombreux essais, une préparation alimentaire qui, une fois préparée, conduit à des produits évoquant ou contretypant les produits traditionnels de type pizza et qui sont en même temps riches en protéines, hypocaloriques, organoleptiquement satisfaisants, stables au point de vue texture, et faciles à préparer.

Ladite préparation alimentaire se présente sous la forme d'une préparation fraîche, surgelée, précuite ou cuite. Bien qu'il soit possible de présenter cette préparation sous la forme d'une pâte et d'une garniture séparées, la reconstitution du produit de type pizza se faisant alors directement au moment de l'étape ultime de préparation avant consommation, on préfère la présenter sous la forme d'une préparation garnie, c'est-à-dire comportant déjà la garniture. Le plus généralement, les préparations en question se présentent sous forme précuite ou cuite, à température ambiante (le conditionnement étant le plus généralement effectué sous atmosphère contrôlée) ou sous une forme surgelée, nécessitant une étape de cuisson ou avant la consommation.

La préparation garnie est caractérisée par le fait que la garniture comprend de la tomate, de préférence sous la forme de purée, des protéines extrudées, des morceaux de légumes et/ou de viandes et/ou de poissons et par le fait qu'elle présente, les pourcentages étant exprimés en poids sur le produit commercial :
- une teneur totale en protéines (mesurée en Nx6.25) comprise entre 8.5 et 28%,
- une teneur en glucides comprise entre 11 et 29%,
- une teneur en lipides comprise entre 1 et 10%,
- une teneur en eau de 10 à 50 %,
- une valeur calorique entre 90 et 200 Kcal par 100 g.

De préférence, la préparation alimentaire selon l'invention présente :
- une teneur totale en protéines (mesurée en Nx6.25) comprise entre 10 et 20%, de préférence entre 10 et 18 %, et plus préférentiellement encore entre 10 et 16%,
- une teneur en glucides comprise entre 11 et 20%, de préférence entre 12 et 18 %, et plus préférentiellement encore entre 12.5 et 16 %,
- une teneur en lipides comprise entre 1.5 et 7 %, de préférence entre 2 et 6 %, et plus préférentiellement encore entre 2 et 5 %,
- une teneur en eau de 10 à 40%.

La valeur calorique totale du produit commercial se situe de préférence entre 130 et 180 kcal/100 g, et plus préférentiellement encore entre 130 et 170 kcal/100 g.

La préparation alimentaire selon l'invention est également caractérisée par le fait que son indice chimique est supérieur à 100. Il est rappelé qu'on entend par indice chimique le produit par 100 du plus petit des quotients obtenus en divisant, pour chacun des acides aminés essentiels ou groupes d'acides aminés essentiels, la quantité présente dans 100 g de produit par la quantité correspondante présente dans 100 g de la protéine servant de référence, celle-ci étant caractérisée par les teneurs suivantes rapportées à 100 g :
- L isoleucine 4 g
- L leucine 7 g
- L lysine 5,5 g
- DL méthionine + L cystine 3,5 g
- L phénylalanine + L tyrosine 6 g
- L thréonine 4 g
- L tryptophane 1 g
- L valine 5 g

Les protéines utilisées pour la constitution de la préparation alimentaire conforme à l'invention peuvent être d'origine animale et/ou végétale.

Pour le fond de pâte, on préfère utiliser comme source essentielle de protéines (autres que celles provenant de la farine) les protéines laitières, telles que la caséine, les caséinates, la protéine laitière totale, la lactalbumine, le lactosérum. La protéine laitière totale est préférentiellement utilisée. On peut ajouter également du gluten, de blé notamment, ainsi que des protéines texturées, notamment des protéines de soja extrudées.

En ce qui concerne la garniture, on préfère utiliser des protéines extrudées ou filées, notamment des protéines végétales telles que le soja. Ces protéines texturées ont l'avantage de se lier à la purée de tomates sans la dénaturer et sans changer sa couleur de façon trop importante.

Le rapport en poids garniture/fond de tarte est généralement compris entre 1/3 et 1/1, de préférence entre 1.5/3 et 2.5/3, et plus préférentiellement encore voisin de 2/3.

Comme glucides, on peut utiliser les farines de toute provenance, les différents types d'amidons, de toute provenance, qu'ils soient natifs ou modifiés, notamment les amidons de maïs et les amidons de blé, ainsi que les sucres et les polyols.

Comme lipides, on préfère utiliser des matières grasses de coprah, de palme, de soja ou de tournesol, sous forme de poudre ou de liquide.

Bien entendu, la préparation conforme à l'invention peut également contenir d'autres ingrédients conventionnels tels que des arômes, du sel, des épaississants, des acides aminés, des épices, des condiments, des exhausteurs de goût, des conservateurs, des colorants, des vitamines, des minéraux, des fibres solubles ou insolubles comme notamment l'inuline ou les polymères de glucose ou de fructose, des émulsifiants, des poudres levantes ou levures et des édulcorants intenses.

La garniture peut contenir en outre des morceaux, de la purée ou de la poudre de légumes, de viandes fraîches ou surgelées, de poissons frais ou surgelés, de fromages, ou de fruits.

Selon une réalisation préférentielle de l'invention, la préparation garnie selon l'invention contient :
- de 2 à 10 %, de préférence de 2.3 à 10 %, et plus préférentiellement encore de 2.3 à 9.5 % de protéines de lait, les protéines de lait totales étant préférées,
- une farine, de préférence de blé, en une quantité généralement comprise entre 13 et 35 %, de préférence entre 13 et 25 %, et plus préférentiellement encore entre 13 et 22 %,
- un agent levant, comme une levure de boulangerie ou de bière, cet agent levant étant présent le plus généralement en une quantité comprise entre 0.1 et 1.2 %, de préférence entre 0.1 et 1.1 %, et plus préférentiellement encore entre 0.15 et 1 %,
- de la tomate, de préférence sous forme de purée, en une quantité comprise entre 15 et 35 %, de préférence entre 16 et 34 %,
- des protéines végétales et/ou animales, notamment des protéines de soja et notamment sous forme texturée, en une quantité comprise entre 1 et 20, de préférence entre 1 et 15, et plus préférentiellement encore entre 1 et 10%.

Pour sa préparation, on ajoute de l'eau en une quantité de 10 à 30 %, de préférence de 12 à 30 %, et plus préférentiellement encore de 15 à 27 %, ce qui conduit à une humidité finale d'environ 10 à environ 50 %, de préférence d'environ 10 à environ 40 %, sur le produit fini.

L'invention a également pour objet le procédé de fabrication de la préparation alimentaire selon l'invention.

Ce procédé comprend les étapes suivantes :
- Pesée des ingrédients du fond de pâte, ceux-ci étant le plus généralement sous forme de poudres,
- Mélange desdits ingrédients,
- Addition d'une quantité choisie d'eau dans un appareil du type pétrin, et malaxage pendant un temps déterminé, généralement compris entre 5 minutes et 30 minutes, de préférence entre 10 minutes et 20 minutes,
- Addition éventuelle d'une quantité d'eau supplémentaire, et mélange,
- Formation de pâtons, notamment sur un appareil du type bouleuse,
- Mise au repos des pâtons ainsi formés, par exemple par un passage sur balancelle,
- Opération de laminage, celle-ci comprenant le plus généralement plusieurs laminages successifs, et éventuellement découpage
- Pesée des différents ingrédients de la garniture, puis mélange desdits ingrédients, éventuellement accompagné d'un broyage,
- Dépôt de la garniture ainsi préparée sur la pâte laminée et éventuellement coupée, et étalement de la garniture sur sensiblement toute la surface du fond de tarte, jusqu'à 1 cm du bord environ,
- Dépôt des autres ingrédients en morceaux et du fromage râpé sur la pâte,
- Cuisson, de préférence au feu de bois, pendant un temps suffisant pour obtenir la coloration recherchée,
- Éventuellement surgélation,
- Conditionnement individuel des produits garnis ainsi obtenus, et mise en étui.

De préférence, le mélange des différents ingrédients pour la préparation du fond de pâte se fait dans l'ordre d'introduction suivant :
1) Farine, protéine, huile, agent levant du type levure de bière,
2) Mélange des poudres,
3) Ajout d'une majeure partie de l'eau dans le pétrin,
4) Mélange, généralement pendant 5 minutes à 30 minutes,
5) Addition du reste d'eau,
6) Mélange, pendant 5 minutes à 15 minutes, de préférence de l'ordre de 10 minutes environ,
7) Addition de sel, puis mélange encore pendant environ 5 minutes.

Les pâtons, généralement formés sur bouleuse, ont de préférence un poids d'environ 200 grammes, et le passage sur la balancelle, afin d'assurer un temps de repos à la pâte, a une durée d'environ 5 minutes à 30 minutes. La cuisson au feu de bois est généralement effectuée pendant 50 secondes à 2 minutes, et de préférence pendant environ 1 minute.

La préparation, en vue de la consommation, des produits de type pizza ainsi préparés, se fait généralement par réchauffage au four traditionnel.

L'invention pourra être mieux comprise à l'aide des exemples qui suivent, qui sont donnés à titre purement illustratif.

### EXEMPLES

Plusieurs essais de fabrication de fond de pâte et de garniture ont été réalisés à l'aide des ingrédients repris dans le Tableau 1 ci-après.

**Tableau 1**

| **INGRÉDIENTS** | **ESSAI 1** | **ESSAI 2** | **ESSAI 3** |
|---|---|---|---|
| ***FOND DE PÂTE*** | | | |
| Farine de blé 55 | 77.04 | 73.08 | 92.8 |
| Protéine totale de lait PL80 (Triballat) | 34.06 | 32.31 | 21.88 |
| Sel | 2.71 | 2.57 | 2.76 |
| Huile de tournesol | 2.17 | 2.06 | 1.38 |
| Levure | 2.71 | 2.57 | 2.87 |
| Eau | 81.31 | 87.41 | 78 |

| ***GARNITURE*** | | | |
|---|---|---|---|
| Tomate | 151.84 | 151.84 | 107.8 |
| Protéine de soja extrudée (Markal) | 0 | 0 | 19.5 |
| Épices | 0 | 0 | 1 |
| Champignon | 100 | 100 | 55 |
| Protéines de lait totales PL 80 (Triballat) | 20.51 | 20.51 | 0 |
| Protéine de lactosérum WPC90 (Triballat) | 27.65 | 27.65 | 0 |
| Fromage | 0 | 0 | 53 |
| Dés de poulet | 0 | 0 | 53 |
| eau | 0 | 0 | 11 |
| **Total** | **500 g** | **500 g** | **500 g** |
| Protéines (pour 100g de produit) | 15.97 | 15.61 | 12.9 |
| Glucides (pour 100g de produit) | 12.68 | 12.10 | 15.13 |
| Lipides (pour 100g de produit) | 1.11 | 1.07 | 4.26 |

### Les commentaires suivants peuvent être faits au sujet de ces essais :

**Essai 1** : la pâte dans le pétrin est trop sèche et cassante. Elle ne résiste pas au laminage. Pour améliorer l'élasticité de cette pâte, il faut augmenter l'eau et baisser l'addition de protéines par rapport à la farine.

**Essai 2** : la couleur de la garniture est très pâle par rapport aux garnitures traditionnelles. Cette couleur est due à la présence de protéines de lait mélangées avec la tomate. Le goût est également trop acre et amer.

**Essai 3 :** l'incorporation à la tomate de protéines extrudées confère à la pizza un goût du type "bolognaise" satisfaisant et original. Le taux de protéine et de farine est réduit afin d'obtenir une pâte élastique et dont les bords soient lisses, non craquelés et continus.

On obtient alors, après cuisson dans un appareil du type four traditionnel ménager pendant environ 15 minutes, un produit du type pizza qui est texturellement, visuellement et organoleptiquement satisfaisant, tout en étant hypocalorique et riche en protéines.

## Revendications

1. Préparation alimentaire riche en protéines et hypocalorique, se présentant sous forme de pâte garnie, pour la fabrication de produits contretypant ou évoquant les produits traditionnels de type pizza, **caractérisée par le fait que** la garniture comprend de la tomate, de préférence sous forme de purée, des protéines extrudées, des morceaux de légumes et/ou de viandes et/ou de poissons et **par le fait qu'**elle présente, les pourcentages étant exprimés en poids sur le produit commercial :
- une teneur totale en protéines (mesurée en Nx6.25) comprise entre 8.5 et 28%,
- une teneur en glucides comprise entre 11 et 29 %,
- une teneur en lipides comprise entre 1 et 10 %,
- une teneur en eau de 10 à 50 %,
- une valeur calorique entre 90 et 200 Kcal par 100 g.

2. Préparation alimentaire selon la revendication 1, **caractérisée par le fait qu'**elle présente une teneur totale en protéines (mesurée en Nx6.25) comprise entre 10 et 20 %, de préférence entre 10 et 18 %, et plus préférentiellement encore entre 10 et 16 %, les pourcentages étant exprimés en poids sur le produit commercial.

3. Préparation alimentaire selon la revendication 1, **caractérisée par le fait qu'**elle présente une teneur en glucides comprise entre 11 et 20 %, de préférence entre 12 et 18 %, et plus préférentiellement encore entre 12.5 et 16 %, les pourcentages étant exprimés en poids sur le produit commercial.

4. Préparation alimentaire selon la revendication 1, **caractérisée par le fait qu'**elle présente une teneur en lipides comprise entre 1.5 et 7 %, de préférence entre 2 et 6 %, et plus préférentiellement encore entre 2 et 5 %, les pourcentages étant exprimés en poids sur le produit commercial.

5. Préparation alimentaire selon la revendication 1, **caractérisée par le fait qu'**elle présente une teneur en eau de 10 à 40 %, les pourcentages étant exprimés en poids sur le produit commercial.

6. Préparation alimentaire selon l'une quelconque des revendications 1 à 5, **caractérisée par le fait qu'**elle comprend une farine, de préférence de blé, en une quantité comprise entre 13 et 35 %, de préférence entre 13 et 25 %, et plus préférentiellement encore entre 13 et 22 %, ces pourcentages étant exprimés en poids sur le produit commercial.

7. Préparation alimentaire selon l'une quelconque des revendications 1 à 6, **caractérisée par le fait qu'**elle présente une teneur en protéines de lait de 2 à 10 %, de préférence entre 2.3 et 10 %, et plus préférentiellement encore de 2.3 à 9.5 %, ces pourcentages étant exprimés en poids sur le produit commercial.

8. Préparation alimentaire selon l'une quelconque des revendications 1 à 7, **caractérisée par le fait qu'**elle contient un agent levant, de préférence une levure de boulangerie ou de bière, en une quantité comprise entre 0.1 et 1.2 %, de préférence entre 0.1 et 1.1 %, et plus préférentiellement encore entre 0.15 et 1 %, ces pourcentages étant exprimés en poids sur le produit commercial.

9. Préparation alimentaire selon l'une quelconque des revendications 1 à 8, **caractérisée par le fait qu'**elle contient de la tomate, de préférence sous forme de purée, en une quantité comprise entre 15 et 35 %, et de préférence entre 16 et 34 %, ces pourcentages étant exprimés en poids sur le produit commercial.

10. Préparation alimentaire selon l'une quelconque des revendications 1 à 9, **caractérisée par le fait qu'**elle contient des protéines végétales, notamment de soja et notamment sous forme texturée, en une quantité comprise entre 1 et 20 %, de préférence entre 1 et 15 %, et plus préférentiellement encore entre 1 et 10 %, ces pourcentages étant exprimés en poids sur le produit commercial.

11. Préparation alimentaire selon l'une quelconque des revendications 1 à 10, **caractérisée par le fait que** l'on ajoute, pour sa préparation, une quantité d'eau comprise entre 10 et 30 %, de préférence entre 12 et 30 %, et plus préférentiellement encore entre 15 et 27 %.

12. Préparation alimentaire selon l'une quelconque des revendications 1 à 11, **caractérisée par le fait que** la valeur calorique totale du produit commercial se situe entre 130 et 180 Kcalories par 100 g, et de préférence entre 130 et 170 Kcalories par 100 g.

13. Préparation alimentaire selon l'une quelconque des revendications 1 à 12, **caractérisée par le fait que** son indice chimique est supérieur à 100.

14. Préparation alimentaire selon l'une quelconque des revendications 7 à 13, **caractérisée par le fait que** la protéine de lait est une protéine laitière totale.

15. Procédé de fabrication d'une préparation alimentaire selon l'une quelconque des revendications 1 à 14, **caractérisée par le fait qu'**il comprend les étapes suivantes :
• Pesée des ingrédients du fond de pâte,
• Mélange desdits ingrédients,
• Addition d'une quantité choisie d'eau dans un appareil du type pétrin, et malaxage pendant un temps déterminé, généralement compris entre 5 minutes et 30 minutes, de préférence entre 10 minutes et 20 minutes,
• Addition éventuelle d'une quantité d'eau supplémentaire, et mélange,
• Formation de pâtons, notamment sur un appareil du type bouleuse,
• Mise au repos des pâtons ainsi formés,
• Opération de laminage, celle-ci comprenant le plus généralement plusieurs laminages successifs, et éventuellement découpage,
• Pesée des différents ingrédients de la garniture, puis mélange desdits ingrédients, éventuellement accompagné d'un broyage,
• Dépôt de la garniture ainsi préparée sur la pâte laminée et éventuellement coupée, et étalement de la garniture,
• Dépôt des autres ingrédients en morceaux et du fromage râpé sur la pâte,
• Cuisson, de préférence au feu de bois, pendant un temps suffisant pour obtenir la coloration recherchée,
• Éventuellement surgélation,
• Conditionnement des produits garnis ainsi obtenus.

16. Procédé selon la revendication 15, **caractérisé par le fait que** les pâtons ont un poids d'environ 200 grammes, et que le temps de repos de la pâte a une durée d'environ 5 minutes à 30 minutes.

## Claims

1. A protein-rich and low calorie food preparation in the form of a dough with topping, for making products imitating or resembling conventional pizza-type products, the topping comprising tomato, preferably in the form of puree, extruded proteins, vegetable and/or meat and/or fish pieces and having:
- a total protein content (measured as N.times.6.25) of between 8.5 and 28%,
- a carbohydrate content of between 11 and 29%,
- a lipid content of between 1 and 10%,
- a water content of 10 to 50%,
- a calorific value of between 90 and 200 Kcal per 100 g,
the percentages being expressed by weight relative to the commercial product.

2. The food preparation as claimed-in claim 1, having a total protein content (measured as N.times.6.25) of between 10 and 20%, preferably between 10 and 18%, and still more preferably between 10 and 16%, the percentages being expressed by weight relative to the commercial product.

3. The food preparation as claimed in claim 1, having a carbohydrate content of between 11 and 20%, preferably between 12 and 18%, and still more preferably between 12.5 and 16%, the percentages being expressed by weight relative to the commercial product.

4. The food preparation as claimed in claim 1, having a lipid content of between 1.5 and 7%, preferably between 2 and 6%, and still more preferably between 2 and 5%, the percentages being expressed by weight relative to the commercial product.

5. The food preparation as claimed in claim 1, having a water content of 10 to 40%, the percentages being expressed by weight relative to the commercial product.

6. The food preparation as claimed in anyone of claims 1 to 5, comprising a flour, preferably wheat flour, in a quantity of between 13 and 35%, preferably between 13 and 25%, and still more preferably between 13 and 22%, these percentages being expressed by weight relative to the commercial product.

7. The food preparation as claimed in anyone of claims 1 to 6, having a milk protein content of 2 and 10%, preferably between 2.3 and 10%, and still more preferably from 2.3 to 9.5%, these percentages being expressed by weight relative to the commercial product.

8. The food preparation as claimed in anyone of claims 1 to 7, containing a leavening agent, preferably baker's or brewer's yeast, in a quantity of between 0.1 and 1.2%, preferably between 0.1 and 1.1%, and still more preferably between 0.15 and 1%, these percentages being expressed by weight relative to the commercial product.

9. The food preparation as claimed in anyone of claims 1 to 8, containing tomato, preferably in puree form, in a quantity of between 15 and 35%, and preferably between 16 and 34%, these percentages being expressed by weight relative to the commercial product.

10. The food preparation as claimed in anyone of claims 1 to 9, containing vegetable proteins, in particular from soybean and in particular in textured form, in a quantity of between 1 and 20%, preferably between 1 and 15%, and still more preferably between 1 and 10%, these percentages being expressed by weight relative to the commercial product.

11. The food preparation as claimed in anyone of claims 1 to 10, wherein a quantity of water of between 10 and 30%, preferably between 12 and 30%, and still more preferably between 15 and 27%, is added for its preparation.

12. The food preparation as claimed in anyone of claims 1 to 11, wherein the total calorific value of the commercial product is between 130 and 180 Kcalories per 100 g, and preferably between 130 and 170 Kcalories per 100 g.

13. The food preparation as claimed in anyone of claims 1 to 12, having a chemical value is greater than 100.

14. The food preparation as claimed in anyone of claims 7 to 13, wherein the milk protein is a total milk protein.

15. A method for making a food preparation as claimed in anyone of claims 1 to 14, comprising the following steps:
• weighing the ingredients for the dough base,
• mixing said ingredients,
• adding a chosen quantity of water to a kneader-type apparatus, and kneading for a defined time, generally of between 5 minutes and 30 minutes, preferably between 10 minutes and 20 minutes,
• optionally adding an additional quantity of water, and mixing,
• forming dough pieces, in particular on a forming-machine type apparatus,
• resting the dough pieces thus formed,
• laminating operation, said operation most generally comprising several successive laminations, and optionally cutting,
• weighing of the various ingredients of the topping and then mixing said ingredients, optionally accompanied by grinding,
• depositing the topping thus prepared on the laminated and optionally cut dough, and spreading the topping,
• depositing the other ingredients in pieces and grated cheese on the dough,
• cooking, preferably on wood fire, for a sufficient time to obtain the desired coloration,
• optionally deep-freezing,
• individual packaging of the products with topping thus obtained.

16. The method as claimed in claim 15, **characterized in that** the dough pieces have a weight of about 200 grams, and **in that** the dough rest time lasts for about 5 minutes to 30 minutes.

## Patentansprüche

1. Proteinreiche und kalorienarme Lebensmittelzusammensetzung, welche in Form eines garnierten Teigs vorliegt, für die Herstellung von herkömmlichen Produkten der Art Pizza oder diesen ähnelnder Produkte, **dadurch gekennzeichnet, dass** die Garnitur Tomate, vorzugsweise in pürierter Form, extrudierte Proteine, Gemüse-und/oder Fleisch- und/oder Fischstückchen aufweist, und **dadurch**, dass sie aufweist, wobei die Prozentzahlen in Gewicht auf das Handelsprodukt ausgedrückt sind:
- einen Gesamtgehalt an Proteinen (gemessen in Nx6,25) zwischen 8,5 und 28%,
- einen Kohlenhydratgehalt zwischen 11 und 29%,
- einen Fettgehalt zwischen 1 und 10%,
- einen Wassergehalt von 10 bis 50%,
- einen Kalorienwert zwischen 90 und 200 kcal pro 100g.

2. Lebensmittelzusammensetzung gemäß Anspruch 1, **dadurch gekennzeichnet, dass** sie einen Gesamtgehalt an Proteinen (gemessen in Nx6,25) zwischen 10 und 20%, vorzugsweise zwischen 10 und 18%, noch bevorzugter zwischen 10 und 16%, aufweist, wobei die Prozentzahlen in Gewicht auf das Handelsprodukt ausgedrückt sind.

3. Lebensmittelzusammensetzung gemäß Anspruch 1, **dadurch gekennzeichnet, dass** sie einen Kohlenhydratgehalt zwischen 11 und 20%, vorzugsweise zwischen 12 und 18%, noch bevorzugter zwischen 12,5 und 16% aufweist, wobei die Prozentzahlen in Gewicht auf das Handelsprodukt ausgedrückt sind.

4. Lebensmittelzusammensetzung gemäß Anspruch 1, **dadurch gekennzeichnet, dass** sie einen Fettgehalt zwischen 1,5 und 7%, vorzugsweise zwischen 2 und 6%, noch bevorzugter zwischen 2 und 5% aufweist, wobei die Prozentzahlen in Gewicht auf das Handelsprodukt ausgedrückt sind.

5. Lebensmittelzusammensetzung gemäß Anspruch 1, **dadurch gekennzeichnet, dass** sie einen Wassergehalt zwischen 10 und 40% aufweist, wobei die Prozentzahlen in Gewicht auf das Handelsprodukt ausgedrückt sind.

6. Lebensmittelzusammensetzung gemäß einem der Ansprüche 1 bis 5, **dadurch gekennzeichnet, dass** sie ein Mehl, vorzugsweise aus Weizen, in einer Menge zwischen 13 und 35%, vorzugsweise zwischen 13 und 25%, noch bevorzugter zwischen 13 und 22% aufweist, wobei die Prozentzahlen in Gewicht auf das Handelsprodukt ausgedrückt sind.

7. Lebensmittelzusammensetzung gemäß einem der Ansprüche 1 bis 6, **dadurch gekennzeichnet, dass** sie einen Gehalt an Milchproteinen von 2 bis 10%, vorzugsweise zwischen 2,3 und 10%, und noch bevorzugter zwischen 2,3 und 9,5% aufweist, wobei die Prozentzahlen in Gewicht auf das Handelsprodukt ausgedrückt sind.

8. Lebensmittelzusammensetzung gemäß einem der Ansprüche 1 bis 7, **dadurch gekennzeichnet, dass** sie ein Treibmittel, vorzugsweise Back- oder Bierhefe, in einer Menge zwischen 0,1 und 1,2%, vorzugsweise zwischen 0,1 und 1,1 %, und noch bevorzugter zwischen 0,15 und 1 %, aufweist, wobei die Prozentzahlen in Gewicht auf das Handelsprodukt ausgedrückt sind.

9. Lebensmittelzusammensetzung gemäß einem der Ansprüche 1 bis 8, **dadurch gekennzeichnet, dass** sie Tomate, vorzugsweise in pürierter Form, in einer Menge zwischen 15 und 35%, vorzugsweise zwischen 16 und 34%, aufweist, wobei die Prozentzahlen in Gewicht auf das Handelsprodukt ausgedrückt sind.

10. Lebensmittelzusammensetzung gemäß einem der Ansprüche 1 bis 9, **dadurch gekennzeichnet, dass** sie pflanzliche Proteine, insbesondere Soja und insbesondere in texturierter Form, in einer Menge zwischen 1 und 20%, vorzugsweise zwischen 1 und 15%, und noch bevorzugter zwischen 1 und 10% aufweist, wobei die Prozentzahlen in Gewicht auf das Handelsprodukt ausgedrückt sind.

11. Lebensmittelzusammensetzung gemäß einem der Ansprüche 1 bis 10, **dadurch gekennzeichnet, dass** für deren Zubereitung eine Wassermenge zwischen 10 und 30%, vorzugsweise zwischen 12 und 30%, noch bevorzugter zwischen 15 und 27% hinzugefügt wird.

12. Lebensmittelzusammensetzung gemäß einem der Ansprüche 1 bis 11, **dadurch gekennzeichnet, dass** der Gesamtwert an Kalorien des Handelsprodukts zwischen 130 und 180 kcal pro 100g, vorzugsweise zwischen 130 und 170 kcal pro 100g, liegt.

13. Lebensmittelzusammensetzung gemäß einem der Ansprüche 1 bis 12, **dadurch gekennzeichnet, dass** ihr chemischer Index größer 100 ist.

14. Lebensmittelzusammensetzung gemäß einem der Ansprüche 7 bis 13, **dadurch gekennzeichnet, dass** das Milchprotein ein Vollmilchprotein ist.

15. Verfahren zur Herstellung einer Lebensmittelzusammensetzung gemäß einem der Ansprüche 1 bis 14, **dadurch gekennzeichnet, dass** es die folgenden Schritte aufweist:
• Abwiegen der Zutaten für den Teig des Bodens,
• Mischen der Zutaten,
• Hinzufügen einer gewählten Menge Wasser in ein Gerät der Art Knetmaschine und Kneten für eine bestimmte Dauer, im Allgemeinen zwischen 5 und 30 Minuten, vorzugsweise zwischen 10 und 20 Minuten,
• gegebenenfalls Hinzufügen einer zusätzlichen Menge Wasser und Mischen,
• Bilden von Teiglingen, insbesondere in einem Gerät der Art Rundwirker,
• Ruhen lassen der so gebildeten Teiglinge,
• Ausrollen, wobei dieses meistens mehrere aufeinanderfolgende Vorgänge aufweist, und gegebenenfalls Ausschneiden,
• Abwiegen der verschiedenen Zutaten für die Garnitur, dann Mischen der Zutaten, gegebenenfalls Zerkleinern,
• Ablegen der so hergestellten Garnitur auf dem ausgerollten und gegebenenfalls ausgeschnittenen Teig, und Verteilen der Garnitur,
• Ablegen anderer Zutaten in Stücken und von geriebenem Käse auf dem Teig,
• Backen, vorzugsweise im Holzfeuer, während einer Dauer, die ausreichend ist, um die gewünschte Färbung zu erhalten,
• gegebenenfalls Einfrieren,
• Verpacken der so erhaltenen garnierten Produkte.

16. Verfahren gemäß Anspruch 15, **dadurch gekennzeichnet, dass** die Teiglinge ein Gewicht von ungefähr 200 Gramm aufweisen, und **dadurch**, dass der Teig für ungefähr 5 bis 30 Minuten ruhen gelassen wird.
